# EUROPÄISCHE PATENTANMELDUNG

(11) **EP 1 890 276 A1**
(43) Veröffentlichungstag der Anmeldung: **20.02.2008**
(21) Anmeldenummer: 07011744.5
(22) Anmeldetag: 15.06.2007
(51) Int. Cl.: G09F 9/37, G02B 26/02

(54) **Anzeige für Werbebotschaften**

(30) Priorität: 18.08.2006 DE 202006012669 U
(71) Anmelder: Wincor Nixdorf International GmbH, 33106 Paderborn (DE)
(72) Erfinder: Roehl, Klaus-Peter, 33106 Paderborn (DE); Boeddeker, Alexandra, 33142 Bueren (DE)

(57) **Zusammenfassung**

Die Erfindung betrifft eine elektronische Werbeanzeigetafel für die Darstellung von Werbeinformationen mit einem ersten Anzeigetafelbereich (4), in dem eine pixeladressierbare Anzeigeeinheit (6) mit elektronischer Tinte zur Darstellung einer veränderbaren Werbeinformation, insbesondere für ein Produkt oder eine Dienstleistung angeordnet ist und einem zweiten Anzeigetafelbereich (5), der nicht elektronische Anzeigemittel zur Darstellung von unveränderbaren Werbeinformationen aufweist.

## Beschreibung

Die Erfindung betrifft eine elektronische Werbeanzeigetafel für die Darstellung von Werbeinformationen mit einem ersten Anzeigetafelbereich, in dem eine pixeladressierbare Anzeigeeinheit mit elektronischer Tinte zur Darstellung einer veränderbaren Werbeinformation insbesondere für ein Produkt oder eine Dienstleistung angeordnet ist.

Aus der US 2002/0167500 A1 ist eine elektronische Werbeanzeigetafel für die Darstellung von Werbeinformationen bekannt, die als eine pixeladressierbare Anzeigeeinheit ausgebildet ist mit elektronischer Tinte. Die Anzeigeeinheit kann beispielsweise in einem Selbstbedienungsgeschäft zur Auszeichnung von Produktpreisen eingesetzt werden. Dabei kann die Anzeigeeinheit auf einem Träger des Verkaufsregals montiert und mit einer zentralen Steuereinheit drahtlos verbindbar sein. Auf diese Weise können die aktuellen Preise für die entsprechenden Produkte komfortabel der Anzeigeeinheit bereitgestellt werden, in der sie dann visualisiert werden.

Die elektronische, pixeladressierbare Anzeigeeinheit kann eine Mehrzahl von Pixeln umfassen, die jeweils aus gegenüberliegenden Elektroden und zwischen denselben gelagerten ausrichtbaren Farbpigmenten bestehen, siehe WO 03/083819 A1. Die bekannte elektronische Werbeanzeigetafel stellt eine Alternative zu auf Papier oder Folien aufgebrachten Werbeinformationen dar.

Aufgabe der vorliegenden Erfindung ist es, eine elektronische Werbeanzeigetafel zu schaffen, mit der veränderbare Informationen neben unveränderbaren Informationen anzeigbar sind.

Zur Lösung dieser Aufgabe sind erfindungsmäß ein erster Anzeigetafelbereich und ein zweiter Anzeigetafelbereich vorgesehen, wobei der erste Anzeigetafelbereich für die Anzeige von veränderbaren Werbeinformationen und der zweite Anzeigetafelbereich zur Darstellung von unveränderbaren Werbeinformationen vorgesehen ist und beide zusammen eine Werbebotschaft ausbilden.

Der besondere Vorteil der Erfindung besteht darin, dass durch Kombination eines ersten Anzeigetafelbereichs, in dem eine veränderbare erste Werbeinformation darstellbar ist, mit einem zweiten Anzeigetafelbereich, in dem lediglich eine unveränderbare zweite Werbeinformation enthalten ist, kostengünstig eine Werbebotschaft anzeigbar ist. Dabei kann der zweite Anzeigetafelbereich mit seinen nicht elektronischen Anzeigemitteln dazu genutzt werden, beispielsweise auf den Hersteller des Produktes bzw. der Dienstleistung hinzuweisen, wobei diese Information nicht so oft geändert wird wie beispielsweise eine Werbeinformation, die in dem ersten Anzeigetafelbereich visualisiert wird. Beispielsweise kann der erste Anzeigetafelbereich dazu genutzt werden, eine Abbildung und/oder den Preis des Produktes zu visualisieren.

Nach einer bevorzugten Ausführungsform der Erfindung ist die pixeladressierbare Anzeigeeinheit durch eine Steuereinheit ansteuerbar, so dass in der Anzeigeeinheit mindestens zwei Werbeinformationen sequentiell und/oder periodisch darstellbar sind. Auf diese Weise kann der Informationsgehalt der Werbeanzeigetafel zu einem bestimmten Produkt erhöht werden, ohne dass die Fläche der Werbeanzeigetafel vergrößert werden müsste.

Nach einer Weiterbildung der Erfindung wird die pixeladressierbare Anzeigeeinheit von der Steuereinheit in einem Zeitintervall von zwei Minuten angesteuert, so dass in dem ersten Anzeigetafelbereich alle zwei Minuten wechselnde bzw. alle vier Minuten wiederkehrende Werbeinformationen dem Kunden zur Verfügung gestellt werden. Auf diese Weise wird der Aufmerksamkeitsgrad des Kunden für das beworbene Produktes bzw. die Dienstleistung erhöht.

Nach einer Weiterbildung der Erfindung stellen die veränderbaren Werbeinformationen spezifizierende Informationen zu den in dem zweiten Anzeigetafelbereich dargestellten unveränderbaren Werbeinformationen dar. Vorteilhaft werden durch die elektronische Anzeigeeinheit Detailinformationen für das Produkt dargestellt, die zusammen mit der unveränderbaren Werbeinformation in dem zweiten Anzeigetafelbereich eine gemeinsame Werbebotschaft bildet.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

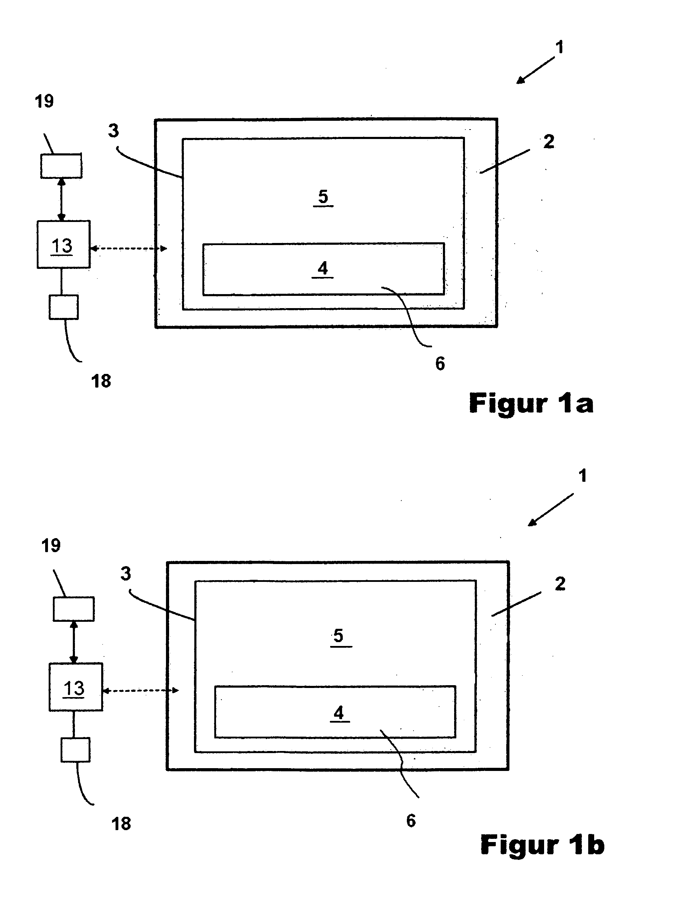

- Figur 1a: eine schematische Darstellung einer elektronischen Werbeanzeigetafel in einem ersten Visualisierungszustand,
- Figur 1 b: eine schematische Darstellung der elektronischen Werbeanzeigetafel in einem zweiten Visualisierungszustand und

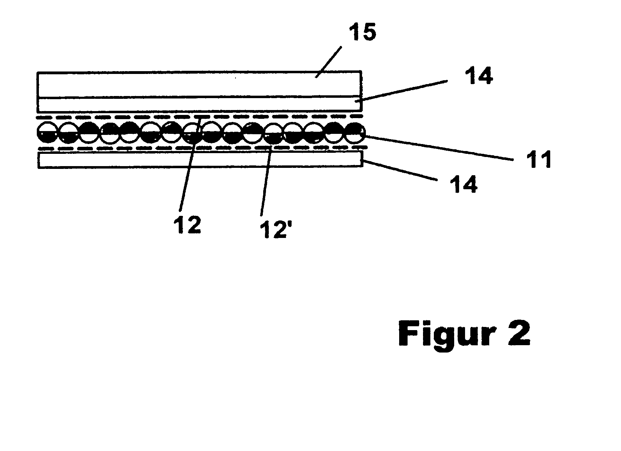

- Figur 2: einen teilweisen Querschnitt durch eine pixeladressierbare Anzeigeeinheit der elektronischen Werbeanzeigetafel mit einer elektronischen Tinte.

Eine elektronische Werbeanzeigetafel 1 für die Darstellung von Werbeinformationen besteht im wesentlichen aus einem Rahmen 2 und einer durch den Rahmen 2 eingefassten Informationsfläche 3.

Die Informationsfläche 3 ist gebildet durch einen ersten Anzeigetafelbereich 4 und einen zweiten Anzeigetafelbereich 5 der Werbeanzeigetafel 1.

In dem ersten Anzeigetafelbereich 4 ist eine pixeladressierbare Anzeigeeinheit 6 angeordnet, die elektronisch ansteuerbare Tinte 7 aufweist zur Darstellung von veränderbaren Werbeinformationen. Die Tinte 7 besteht vorzugsweise aus weiß- und schwarzfarbigen Pigmenten, die in Mikrokapseln 11 angeordnet sind und dort in einer transparenten öligen Flüssigkeit schweben. Die Mikrokapseln 11 sind verteilt zwischen einer Mehrzahl von paarweise angeordneten Elektroden 12, 12' angeordnet. Die Anzeigeeinheit 6 ist mit einer Steuereinheit 13 verbunden, mittels derer die Elektrodenpaare 12, 12' einzeln ansteuerbar sind und je nachdem, ob an ihnen eine positive oder negative Spannung anliegt, sich weiße oder schwarze Pigmente anlagern. Aus den Farbpunkten setzt sich die veränderbare Werbeinformation zusammen. Die elektronische Tinte 7 ist zusammen mit den Elektroden 12, 12' auf einem Substrat 14 aufgebracht. Auf einer Vorderseite der Anzeigeeinheit 6 ist eine transparente Deckplatte 15 vorgesehen, die die elektronische Tinte 7 vor Umgebungseinflüssen schützt.

Der erste Anzeigetafelbereich 4 ist vorzugsweise von einem zweiten Anzeigetafelbereich 5 umgeben, der über nicht elektronische Anzeigemittel zur Darstellung von unveränderbaren Werbeinformationen verfügt. Die unveränderbaren Werbeinformationen und die veränderbaren Werbeinformationen bilden zusammen eine Werbebotschaft beispielsweise für ein Produkt "A" bzw. für eine Dienstleistung. Der Anzeigetafelbereich 5 kann beispielsweise als eine Papier- oder Kunststoffschicht (Kunststofffolie) ausgebildet sein, auf die Buchstabenfolgen aufgedruckt bzw. auflaminiert sind. Die unveränderbare Werbeinformation kann beispielsweise einen Werbespruch für ein Produkt "A" mit folgendem Text enthalten: "Produkt A sehen sie von zwei Seiten". Die veränderbaren Werbeinformationen, die durch die elektronische Anzeigeeinheit 6 dargestellt werden, enthalten spezifizierende Informationen zu dem Produkt "A" und können beispielsweise ein Bild 1 des Produktes "A" bzw. ein Bild 2 des Produktes "A" aufweisen.

Vorzugsweise ist in dem Rahmen 2 die Steuereinheit 13 integriert, die sequentiell und/oder periodisch die elektronische Anzeigeeinheit 6 derart ansteuert, dass die veränderbare Werbeinformation in einem vorgegebenen Zeitintervall abwechselnd dargestellt wird. Das Zeitintervall kann beispielsweise zwei Minuten betragen. Alternativ können auch mehr als zwei veränderbare Werbeinformationen und gegebenenfalls in einem kürzeren oder längeren Zeitintervall dargestellt werden.

Die Steuereinheit 13 wird durch eine Batterie 18 gespeist, die ebenfalls platzsparend innerhalb des Rahmens 2 angeordnet ist.

Vorteilhaft ermöglicht die Kombination des ersten Anzeigetafelbereichs 4 und des zweiten Anzeigetafelbereichs 5 eine kostengünstige Bereitstellung einer Werbebotschaft zu einer bestimmten Produkt bzw. einer Dienstleistung. Beispielsweise kann die unveränderbare Werbeinformation auch durch Angabe des Produktherstellers gebildet sein, während in den veränderbaren Werbeinformationen der Produktname bzw. ein Produktbild bzw. der Produktpreis dargestellt werden.

Vorzugsweise werden die unveränderbaren Werbeinformationen durch relativ große Schriftzeichen gebildet.

Nach einer weiteren Ausführungsform der Erfindung kann in dem Rahmen 2 eine Sende-/Empfangseinheit 19 integriert sein, so dass die veränderbaren Werbeinformationen drahtlos von einer nicht dargestellten zentralen Datenverarbeitungseinheit in den Speicher der Anzeigeeinheit 6 übertragbar sind. Hierdurch kann eine Aktualisierung der Werbebotschaft erfolgen, ohne dass der Inhalt der Werbeinformation in dem zweiten Anzeigetafelbereich 5 geändert werden müsste. Durch eine Zuordnung von unveränderbaren Werbeinformationen zu dem zweiten Anzeigetafelbereich 5 und Zuordnung von veränderbaren Werbeinformationen zu dem ersten Anzeigetafelbereich 4 der Werbeanzeigetafel 1 kann somit eine kostengünstige Bereitstellung von sich ändernden Werbebotschaften erzielt werden.

Vorzugsweise werden die erfindungsgemäßen Werbeanzeigetafeln 1 in einem Selbstbedienungsverkaufsraum oder an Geldautomaten oder Kontoauszugsdruckern angebracht. Da die Werbeanzeigetafel 1 autark betreibbar ist, kann sie vorzugsweise überall dort eingesetzt werden, wo keine elektrische Stromversorgung vorliegt. Beispielsweise kann die Werbeanzeigetafel 1 an Verkaufsregalen oder an einem beliebigen Ort im Verkaufsraum angebracht werden.

## Patentansprüche

1. Werbeanzeigetafel für die Darstellung von Werbeinformationen **gekennzeichnet durch** einen ersten Anzeigetafelbereich (4), in dem eine pixeladressierbare Anzeigeeinheit (6) mit elektronischer Tinte zur Darstellung einer veränderbaren Werbeinformation angeordnet ist, und einen zweiten Anzeigetafelbereich (5), der nicht elektronische Anzeigemittel zur Darstellung von unveränderbaren Werbeinformationen aufweist, die zusammen mit den in dem ersten Anzeigetafelbereich (4) dargestellten veränderbaren Werbeinformationen eine Werbebotschaft bilden.

2. Werbeanzeigetafel nach Anspruch 1, **dadurch gekennzeichnet, dass** die pixeladressierbare Anzeigeeinheit (6) mit einer Steuereinheit (13) verbunden ist, derart, dass in der Anzeigeeinheit (6) sequentiell und/oder periodisch mindestens zwei veränderbare Werbeinformationen dargestellt werden.

3. Werbeanzeigetafel nach Anspruch 1 oder 2, **dadurch gekennzeichnet, dass** die Anzeigeeinheit (6) von der Steuereinheit (13) derart ansteuerbar ist, dass die veränderbaren Werbeinformationen in einem vorgegebenen Zeitintervall abwechselnd dargestellt werden.

4. Werbeanzeigetafel nach einem der Ansprüche 1 bis 3, **dadurch gekennzeichnet, dass** das Anzeigemittel des zweiten Anzeigetafelbereichs (5) durch eine Papier- oder Kunststoffschicht gebildet ist, auf der Informationen aufgedruckt sind.

5. Werbeanzeigetafel nach einem der Ansprüche 1 bis 4, **dadurch gekennzeichnet, dass** eine Sende-/Empfangseinheit (19) vorgesehen ist, derart, dass die veränderbare Werbeinformation drahtlos von einer zentralen Datenverarbeitungseinrichtung in einen Speicher der Anzeigeeinheit (6) übertragbar und auf der Anzeigeeinheit (6) anzeigbar ist.

6. Werbeanzeigetafel nach einem der Ansprüche 1 bis 5, **dadurch gekennzeichnet, dass** ein Rahmen (2) vorgesehen ist, in dem eine Batterie (18) und/oder die Steuereinheit (13) und/oder die Sende-/Empfangseinheit (19) verdeckt untergebracht ist.

7. Verwendung einer Werbeanzeigetafel nach einem der Ansprüche 1 bis 6 in einem Selbstbedienungsverkaufsraum.

8. Verwendung einer Werbeanzeigetafel nach einem der Ansprüche 1 bis 6 an einem Geldautomaten oder an einem Kontoauszugsdrucker.
